# EUROPÄISCHE PATENTSCHRIFT

(11) **EP 3 445 639 B1**
(45) Veröffentlichungstag und Bekanntmachung des Hinweises auf die Patenterteilung: **06.07.2022**
(21) Anmeldenummer: 17718862.0
(22) Anmeldetag: 12.04.2017
(51) Int. Cl.: B62D 5/00, B62D 5/04, B60R 25/04, B60R 25/02, B62D 1/28, B62D 1/00

(54) **TRANSPORTSCHLÜSSEL FÜR EIN STEER BY WIRE-LENKSYSTEM FÜR KRAFTFAHRZEUGE**
TRANSPORT KEY FOR A STEER-BY-WIRE STEERING SYSTEM FOR MOTOR VEHICLES
CLÉ DE TRANSPORT POUR UN SYSTÈME DE DIRECTION PAR CÂBLES POUR VÉHICULES AUTOMOBILES

(30) Priorität: 19.04.2016 DE 102016004593
(43) Veröffentlichungstag der Anmeldung: 27.02.2019
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT); STECK, Philippe, 9487 Gamprin-Bendern (LI)
(74) Vertreter: thyssenkrupp Intellectual Property GmbH
(86) Internationale Anmeldenummer: PCT/EP2017/058742
(87) Internationale Veröffentlichungsnummer: WO 2017/182351

(56) Entgegenhaltungen:
- EP-A1- 1 138 563
- EP-A1- 2 738 067

## Beschreibung

Die vorliegende Erfindung betrifft ein Steer-by-Wire-Lenksystem für Kraftfahrzeuge mit den Merkmalen des Oberbegriffs des Anspruchs 1.

Kraftfahrzeuge mit herkömmlichen EPAS Lenksystemen verfügen über eine durchgehende mechanische Verbindung zwischen dem Lenkrad und den gelenkten Rädern, so dass auch bei Ausfall der Servounterstützung weiterhin der mechanische Durchgriff besteht. In Steer-by-Wire-Lenksystemen wird gänzlich auf eine mechanische Verbindung zwischen Lenkrad und Lenkgetriebe verzichtet. An Stelle der mechanischen Kopplung werden ein Radwinkelsteller zur Positionierung der Räder sowie ein Handkraftaktuator zur Simulation der Rückstellkräfte am Lenkrad verwendet.

Bei einem solchen Steer-by-Wire Lenksystem ist es dem Fahrer im Falle des Versagens der Lenkunterstützung nicht möglich, mittels eines mechanischen Durchgriffes und Aufbringen von Muskelkraft das Fahrzeug weiterhin zu lenken. Um eine zu konventionellen Lenksystemen vergleichbare Ausfallsicherheit zu erreichen, muss man ein Steer-by-Wire-Lenksystem entweder ausfallsicher oder fehlertolerant ausführen. Ein ausfallsicheres Steer-by-Wire-System beinhaltet eine mechanische Rückfallebene. Die mechanische Rückfallebene ermöglicht es, im Falle eines sicherheitskritischen elektrischen oder elektronischen Fehlers alle elektronisch gesteuerten Funktionen abzuschalten und das Steer-by-Wire-System in den Modus einer konventionellen mechanischen Lenkung zu überführen.

Ein fehlertolerantes Steer-by-Wire-System basiert dagegen auf einer Verteilung der zur Aufrechterhaltung der Systemfunktionen erforderlichen Hardware. Die Hardware wird dabei auf mehrere elektronische und mechatronische Subsysteme verteilt, die lokale Redundanzen bilden. Wenn ein Subsystem ausfällt beziehungsweise in Folge der interne oder externe Fehlererkennungsmechanismus abgeschaltet wird, gewährleistet seine lokale Redundanz ein Aufrechterhalten der von diesem Subsystem unterstützen Systemfunktion.

Ein solches System mit elektrischer Rückfallebene ist beispielsweise aus US 2013/0060424 A1 bekannt.

Im Störungsfall des Steer-by-Wire-Systems kann das Kraftfahrzeug über die elektrische Rückfallebene weiterhin gelenkt und sicher am Straßenrand zum Stillstand gebracht werden. Es ist somit ein Notfallbetrieb vorgesehen, der ein "limp aside", also ein Lenken/Bewegen/Fahren des Fahrzeugs in eine sichere Parkposition ermöglicht oder eventuell auch ein "limp home", also ein Lenken/Bewegen/Fahren des Fahrzeugs über eine längere Distanz, beispielsweise in eine Werkstatt. Um eine weitere Benutzung des nun nicht mehr ausfallsicheren Lenksystems durch den Fahrer zu verhindern, wird das Kraftfahrzeug abgeschaltet. Das Fahrzeug muss geborgen werden, beispielsweise durch Verladen auf einen Anhänger und in eine Werkstatt überführt werden, wo es bis zur Reparatur manövrierunfähig bleibt.

In der EP 2 738 067 A1 wird ein Steer-by-Wire-Lenksystem für Kraftfahrzeuge beschrieben, welches redundant ausgestaltet ist. Beim Ausfall eines Hauptantriebs der Lenkung wird durch eine interne Steuereinrichtung ein Hilfsantrieb aktiviert. Dadurch wird ein Notfallbetrieb bis zur Abschaltung des Fahrzeugs ermöglicht. Das Dokument EP 2 738 067 A1 offenbart den Oberbegriff der Ansprüche 1 und 6.

Es ist Aufgabe der vorliegenden Erfindung, ein fehlertolerantes Steer-by-Wire-Lenksystem für Kraftfahrzeuge anzugeben, bei dem im Fehlerfall ein Rangieren des Kraftfahrzeuges möglich bleibt.

Diese Aufgabe wird von einem Steer-by-Wire-Lenksystem mit den Merkmalen des Anspruchs 1 und des Anspruchs 6, und von einem Endgerät zur Authentifikation für ein Steer-by-Wire-Lenksystem mit den Merkmalen des Anspruchs 16 gelöst. In den Unteransprüchen sind vorteilhafte Weiterbildungen der Erfindung genannt.

Demnach ist ein Steer-by-Wire-Lenksystem für Kraftfahrzeuge aufweisend eine primäre Lenkungsebene mit einer Lenkübertragungseinrichtung, die derart eingerichtet ist, dass sie zu lenkende Räder des Kraftfahrzeugs mit einer gewünschten Solllenkwirkung beaufschlagt, und eine sekundäre Lenkungsebene mit einer Sicherheitseinrichtung, die vordefinierte Funktionen bereitstellt, so dass in einem Störfall der primären Lenkungsebene, das Lenken der Räder während eines Notfallbetriebs möglich bleibt, vorgesehen, wobei das Steer-by-Wire-Lenksystem ein Authentifizierungssystem mit einer Kommunikationsschnittstelle zur Kommunikation mit der Sicherheitseinrichtung aufweist, wobei das Authentifizierungssystem derart eingerichtet ist, dass mit dessen Hilfe Sicherheitsfunktionen überbrückt werden können und dass im Fall einer erfolgreiche Autorisierung die sekundäre Lenkungsebene des Steer-by-Wire-Lenksystems auch nach dem Notfallbetrieb zur Verfügung steht. Dieses fehlertolerante Steer-by-Wire-Lenksystem erlaubt, dass auch im Fehlerfall ein Rangieren des Kraftfahrzeuges möglich bleibt.

Die Erfindung umfasst weiterhin ein Steer-by-Wire-Lenksystem für Kraftfahrzeuge aufweisend eine primäre Lenkungsebene mit einer Lenkübertragungseinrichtung, die derart eingerichtet ist, dass sie zu lenkende Räder des Kraftfahrzeugs mit einer gewünschten Solllenkwirkung beaufschlagt, und eine sekundäre Lenkungsebene mit einer Sicherheitseinrichtung, die vordefinierte Funktionen bereitstellt, so dass in einem Störfall der primären Lenkungsebene, das Lenken der Räder während eines Notfallbetriebs möglich bleibt, wobei das Steer-by-Wire-Lenksystem ein Authentifizierungssystem mit einer Kommunikationsschnittstelle zur Kommunikation mit der Sicherheitseinrichtung aufweist, wobei das Authentifizierungssystem derart eingerichtet ist, dass im Fall einer erfolgreichen Autorisierung die sekundäre Lenkungsebene des Steer-by-Wire-Lenksystems auch nach dem Notfallbetrieb zur Verfügung steht, wobei das Authentifizierungssystem derart ausgestaltet ist, dass das Authentifikationsverfahren mit einer Standortabfrage verknüpft ist.

Vorzugsweise weist das Authentifizierungssystem ein Endgerät zur Authentifikation auf. Dabei ist es vorteilhaft, wenn das Endgerät extern ist und an die Kommunikationsschnittstelle anschließbar ist.

Das Authentifizierungssystem ist bevorzugt derart ausgestaltet, dass ein Authentifikationsverfahren abläuft, bei dem ein Schlüssel oder Code überprüft wird.

In einer Ausgestaltungsform ist das Authentifizierungssystem derart ausgestaltet, dass ein Authentifikationsverfahren abläuft, bei dem ein über das Endgerät eingegebener Schlüssel oder Code überprüft wird.

Dabei ist es bevorzugt, dass vorgegebene Standorte für die Standortabfrage vorab freigegeben sind. Es kann aber auch vorgesehen sein, dass vorgegebene geographische Bereiche für die Standortabfrage vorab freigegeben sind.

Bevorzugt ist die Standortabfrage GPS basiert.

Die sekundäre Lenkungsebene ist vorzugsweise elektrisch oder elektronisch ausgebildet. Weiterhin ist die Kommunikationsschnittstelle vorteilhafterweise unidirektional.

Es ist weiterhin ein Endgerät zur Authentifikation für ein zuvor beschriebene Steer-by-Wire-Lenksystem vorgesehen, dass den speziellen Anforderungen Rechnung trägt.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines fehlertoleranten Steer-by-Wire-Lenksystems im Betriebszustand,
- Fig. 2:: eine schematische Darstellung des Steer-by-Wire-Lenksystems aus Figur 1 im Störungszustand, sowie
- Fig. 3:: eine schematische Darstellung des Steer-by-Wire-Lenksystems aus Figur 1 bei dem die Rangierfähigkeit im Störungszustand mit einem Spezialschlüssel wiederhergestellt ist.

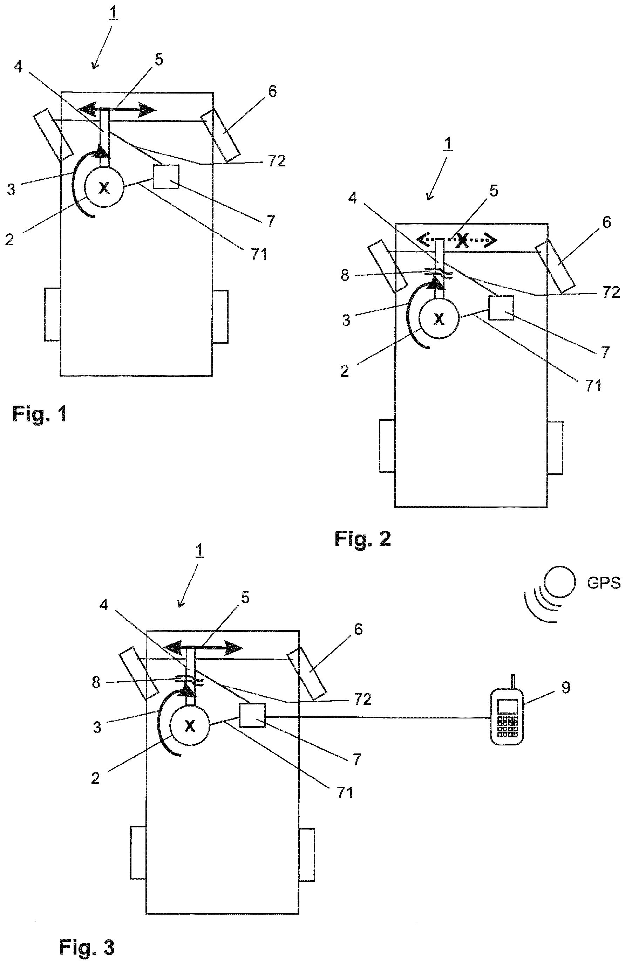

In der Figur 1 ist ein Kraftfahrzeug 1 mit einer Steer-by-Wire-Lenkeinrichtung dargestellt, bei der der Fahrer das Kraftfahrzeug mit einem Lenkrad 2 steuert oder das Fahrzeug über ein automatisches Programm gesteuert wird. Beim Lenken wird die Lenkbewegung 3 über eine Lenkübertragungseinrichtung 4 auf ein mechanisches Stellsystem 5 übertragen, das über Spurstangen die Räder 6 mit der gewünschten Solllenkwirkung beaufschlagt. Eine Sicherheitseinrichtung 7 mit Mess- und Steuerleitungen 71, 72 bildet die Rückfallebene und ermöglicht eine Fehlerredundanz.

Im Fall eines Fehlers oder einer Unterbrechung 8 im Lenksystem, wie in Figur 2 dargestellt, kann die Sicherheitseinrichtung 7 gewisse Funktionen bereitstellen, mit deren Hilfe das Fahrzeug noch an den Straßenrand gefahren und angehalten werden kann. Allerdings ist es denkbar und möglich, dass selbst derartige Funktionen aus Sicherheitsgründen nicht mehr zugelassen werden können oder aus technischen Gründen nicht mehr darstellbar sind. Entsprechend ist die Verbindung zum mechanischem Stellsystem 5 unterbrochen und das Fahrzeug kann nicht mehr rangiert werden.

Damit das Fahrzeug manövrierfähig bleibt, ist ein Authentifizierungssystem 9 vorgesehen, mit dessen Hilfe Sicherheitsfunktionen überbrückt werden können und so beispielsweise eine mechanische Kopplung, die als Rückfallebene vorgesehen war, durch einen elektrischen Direkteingriff ersetzt werden kann. Das Authentifizierungssystem 9 weist eine Kommunikationsschnittstelle zu dem Steer-by-Wire-Lenksystem des Kraftfahrzeugs und ein Endgerät zur Authentifikation auf, beispielsweise ein Multifunktionsdisplay oder Ähnliches, das eine Eingabe eines Werkstattschlüssels oder eines Codes erlaubt. Über die Kommunikationsschnittstelle wird der Werkstattschlüssel oder der Code an die Sicherheitseinrichtung 7 übertragen und dort ausgewertet. In einer anderen Ausführungsform kann das Authentifizierungssystem 9 als Steuergerät zur direkten Eingabe der Lenkbewegung verwendet werden, die an das mechanische Stellsystem 5 übertragen wird. Das Authentifizierungssystem 9 stellt sicher, dass das Steer-by-Wire-Lenksystem exklusiv, nur für einen bestimmten Personenkreis zugänglich ist. In einer anderen Ausführungsform ist der Werkstattschlüssel oder Code bereits in dem Endgerät hinterlegt. Weiterhin ist es denkbar, anstelle eines Werkstattschlüssel oder Codes andere bekannte Authentifikationsverfahren, wie beispielsweise biometrische Fingerabdruck-Systeme, einzusetzen.

Zur Erhöhung der Sicherheit kann zusätzlich im Authentifizierungssystem 9 oder in der Sicherheitseinrichtung 7 eine Standortabfrage, beispielsweise mittels GPS-Ortung, vorgesehen sein. Standorte können somit für das Authentifizierungssystem 9 vorab freigegeben werden. Es kann dabei vorgesehen sein, dass die Freischaltung für einen gewissen geographischen Bereich erfolgt, um Missbrauch oder Diebstahl zu verhindern. Denkbar ist auch, auf Anfrage Standorte freischalten zulassen.

Das Steer-by-Wire-Lenksystem kann somit durch einen autorisierten Fachmann reaktiviert werden. Die noch funktionsfähige Rückfallebene wird daraufhin in einen Modus versetzt, welche ein Fahren des Fahrzeuges ermöglicht. Zur Sicherheit kann dieser Übergangszustand auf niedrige Fahrzeuggeschwindigkeiten begrenzt werden. In diesem Modus kann das Fahrzeug beispielsweise durch einen Bergungsfachmann auf einen Abschleppwagen gefahren werden oder durch einen Mechaniker in der Werkstatt rangiert werden.

In der oben beschriebenen Situation eines ohne primäre Lenkungsebene mittels Steer-by-Wire gelenkten Fahrzeuges steht die Rückfallebene, mithilfe welcher das Fahrzeug zum sicheren Stillstand gebracht wurde, weiterhin zur Verfügung. Die vorliegende Erfindung eröffnet eine technische Lösung, wie ein solches Fahrzeug für autorisierte Personen weiterhin manövrierfähig bleibt. Dies stellt beim Abschleppen, aber auch im Werkstattbetrieb eine deutliche Vereinfachung des Handlings eines Kraftfahrzeugs mit Steer-by-Wire-Lenksystem dar.

## Patentansprüche

1. Steer-by-Wire-Lenksystem für Kraftfahrzeuge aufweisend
• eine primäre Lenkungsebene mit einer Lenkübertragungseinrichtung (4), die derart eingerichtet ist, dass sie zu lenkende Räder (6) des Kraftfahrzeugs mit einer gewünschten Solllenkwirkung beaufschlagt, und
• eine sekundäre Lenkungsebene mit einer Sicherheitseinrichtung (7), die vordefinierte Funktionen bereitstellt, so dass in einem Störfall der primären Lenkungsebene, das Lenken der Räder (6) während eines Notfallbetriebs möglich bleibt, **dadurch gekennzeichnet, dass** das Steer-by-Wire-Lenksystem ein Authentifizierungssystem (9) mit einer Kommunikationsschnittstelle zur Kommunikation mit der Sicherheitseinrichtung (7) aufweist, wobei das Authentifizierungssystem (9) derart eingerichtet ist, dass mit dessen Hilfe Sicherheitsfunktionen überbrückt werden können und dass im Fall einer erfolgreichen Autorisierung die sekundäre Lenkungsebene des Steer-by-Wire-Lenksystems auch nach dem Notfallbetrieb zur Verfügung steht.

2. Steer-by-Wire-Lenksystem nach Anspruch 1, **dadurch gekennzeichnet, dass** das Authentifizierungssystem (9) ein Endgerät zur Authentifikation aufweist.

3. Steer-by-Wire-Lenksystem nach Anspruch 2, **dadurch gekennzeichnet, dass** das Endgerät extern ist und an die Kommunikationsschnittstelle anschließbar ist.

4. Steer-by-Wire-Lenksystem nach einem der vorhergehenden Ansprüche, **dadurch gekennzeichnet, dass** das Authentifizierungssystem (9) derart ausgestaltet ist, dass ein Authentifikationsverfahren abläuft, bei dem ein Schlüssel oder Code überprüft wird.

5. Steer-by-Wire-Lenksystem nach einem der vorhergehenden Ansprüche 1 bis 3, **dadurch gekennzeichnet, dass** das Authentifizierungssystem (9) derart ausgestaltet ist, dass ein Authentifikationsverfahren abläuft, bei dem ein über das Endgerät eingegebener Schlüssel oder Code überprüft wird.

6. Steer-by-Wire-Lenksystem für Kraftfahrzeuge aufweisend
• eine primäre Lenkungsebene mit einer Lenkübertragungseinrichtung (4), die derart eingerichtet ist, dass sie zu lenkende Räder (6) des Kraftfahrzeugs mit einer gewünschten Solllenkwirkung beaufschlagt, und
• eine sekundäre Lenkungsebene mit einer Sicherheitseinrichtung (7), die vordefinierte Funktionen bereitstellt, so dass in einem Störfall der primären Lenkungsebene, das Lenken der Räder (6) während eines Notfallbetriebs möglich bleibt, **dadurch gekennzeichnet, dass** das Steer-by-Wire-Lenksystem ein Authentifizierungssystem (9) mit einer Kommunikationsschnittstelle zur Kommunikation mit der Sicherheitseinrichtung (7) aufweist, wobei das Authentifizierungssystem (9) derart eingerichtet ist, dass im Fall einer erfolgreichen Autorisierung die sekundäre Lenkungsebene des Steer-by-Wire-Lenksystems auch nach dem Notfallbetrieb zur Verfügung steht, wobei das Authentifizierungssystem (9) derart ausgestaltet ist, dass das Authentifikationsverfahren mit einer Standortabfrage verknüpft ist.

7. Steer-by-Wire-Lenksystem nach Anspruch 6, **dadurch gekennzeichnet, dass** das Authentifizierungssystem (9) derart ausgestaltet ist, dass vorgegebene Standorte für die Standortabfrage vorab freigegeben sind.

8. Steer-by-Wire-Lenksystem nach Anspruch 6, **dadurch gekennzeichnet, dass** das Authentifizierungssystem (9) derart ausgestaltet ist, dass vorgegebene geographische Bereiche für die Standortabfrage vorab freigegeben sind.

9. Steer-by-Wire-Lenksystem nach einem der Ansprüche 6 bis 8, **dadurch gekennzeichnet, dass** das Authentifizierungssystem (9) derart ausgestaltet ist, dass die Standortabfrage GPS basiert ist.

10. Steer-by-Wire-Lenksystem nach einem der vorhergehenden Ansprüche 6 bis 9, **dadurch gekennzeichnet, dass** die sekundäre Lenkungsebene elektrisch oder elektronisch ausgebildet ist.

11. Steer-by-Wire-Lenksystem nach einem der vorhergehenden Ansprüche 6 bis 10, **dadurch gekennzeichnet, dass** die Kommunikationsschnittstelle unidirektional ausgebildet ist.

12. Steer-by-Wire-Lenksystem nach einem der Ansprüche 6 bis 11, **dadurch gekennzeichnet, dass** das Authentifizierungssystem (9) ein Endgerät zur Authentifikation aufweist.

13. Steer-by-Wire-Lenksystem nach Anspruch 12, **dadurch gekennzeichnet, dass** das Endgerät extern ist und an die Kommunikationsschnittstelle anschließbar ist.

14. Steer-by-Wire-Lenksystem nach einem der vorhergehenden Ansprüche 6 bis 13, **dadurch gekennzeichnet, dass** das Authentifizierungssystem (9) derart ausgestaltet ist, dass ein Authentifikationsverfahren abläuft, bei dem ein Schlüssel oder Code überprüft wird.

15. Steer-by-Wire-Lenksystem nach einem der vorhergehenden Ansprüche 6 bis 13, **dadurch gekennzeichnet, dass** das Authentifizierungssystem (9) derart ausgestaltet ist, dass ein Authentifikationsverfahren abläuft, bei dem ein über das Endgerät eingegebener Schlüssel oder Code überprüft wird.

16. Endgerät zur Authentifikation für ein Steer-by-Wire-Lenksystem nach einem der vorhergehenden Ansprüche 1 bis 15.

## Claims

1. Steer-by-wire steering system for motor vehicles, comprising
• a primary steering level with a steering transmission device (4), which is set up so as to subject the wheels (6) to be steered of the motor vehicle to a desired setpoint steering effect, and
• a secondary steering level with a safety device (7) that provides predefined functions, such that in the case of a malfunction of the primary steering level, steering the wheels (6) remains possible during an emergency mode, **characterized in that** the steer-by-wire steering system comprises an authentication system (9) with a communications interface for communication with the safety device (7), wherein the authentication system (9) is set up such that it can be used to bypass safety functions and such that in the case of a successful authorization the secondary steering level of the steer-by-wire steering system is also available following the emergency mode.

2. Steer-by-wire steering system according to Claim 1, **characterized in that** the authentication system (9) comprises a terminal for authentication.

3. Steer-by-wire steering system according to Claim 2, **characterized in that** the terminal is external and can be connected to the communications interface.

4. Steer-by-wire steering system according to any one of the preceding claims, **characterized in that** the authentication system (9) is designed such that an authentication method is carried out in which a key or code is checked.

5. Steer-by-wire steering system according to any one of the preceding Claims 1 to 3, **characterized in that** the authentication system (9) is designed such that an authentication method is carried out in which a key or code input by means of the terminal is checked.

6. Steer-by-wire steering system for motor vehicles, comprising
• a primary steering level with a steering transmission device (4), which is set up so as to subject the wheels (6) to be steered of the motor vehicle to a desired setpoint steering effect, and
• a secondary steering level with a safety device (7) that provides predefined functions, such that in the case of a malfunction of the primary steering level, steering the wheels (6) remains possible during an emergency mode, **characterized in that** the steer-by-wire steering system comprises an authentication system (9) with a communications interface for communication with the safety device (7), wherein the authentication system (9) is set up such that in the case of a successful authorization the secondary steering level of the steer-by-wire steering system is also available following the emergency mode, wherein the authentication system (9) is designed such that the authentication method is combined with a location query.

7. Steer-by-wire steering system according to Claim 6, **characterized in that** the authentication system (9) is designed such that specified locations are pre-approved for the location query.

8. Steer-by-wire steering system according to Claim 6, **characterized in that** the authentication system (9) is designed such that specified geographic regions are pre-approved for the location query.

9. Steer-by-wire steering system according to any one of Claims 6 to 8, **characterized in that** the authentication system (9) is designed so that the location query is GPS-based.

10. Steer-by-wire steering system according to any one of the preceding Claims 6 to 9, **characterized in that** the secondary steering level is of electrical or electronic form.

11. Steer-by-wire steering system according to any one of the preceding Claims 6 to 10, **characterized in that** the communications interface is of unidirectional form.

12. Steer-by-wire steering system according to any one of the preceding Claims 6 to 11, **characterized in that** the authentication system (9) comprises a terminal for authentication.

13. Steer-by-wire steering system according to Claim 12, **characterized in that** the terminal is external and can be connected to the communications interface.

14. Steer-by-wire steering system according to any one of the preceding Claims 6 to 13, **characterized in that** the authentication system (9) is designed such that an authentication method is carried out in which a key or code is checked.

15. Steer-by-wire steering system according to any one of the preceding Claims 6 to 13, **characterized in that** the authentication system (9) is designed such that an authentication method is carried out in which a key or code input by means of the terminal is checked.

16. Terminal for authentication for a steer-by-wire steering system according to any one of the preceding Claims 1 to 15.

## Revendications

1. Système de direction à commande électrique (« steer-by-wire ») pour véhicules automobiles comprenant
• un plan de direction primaire doté d'un dispositif de transmission de direction (4) qui est conçu de telle sorte qu'il soumet des roues (6) devant être dirigées du véhicule automobile à un effet de consigne souhaité, et
• un plan de direction secondaire doté d'un dispositif de sécurité (7) qui fournit des fonctions prédéfinies, de sorte qu'en cas de malfonctionnement du plan de direction primaire, la direction des roues (6) demeure possible pendant un fonctionnement d'urgence, **caractérisé en ce que** le système de direction à commande électrique comprend un système d'authentification (9) doté d'une interface de communication servant à la communication avec le dispositif de sécurité (7), le système d'authentification (9) étant conçu de telle sorte que grâce à lui des fonctions de sécurité peuvent être évitées et **en ce que**, dans le cas d'une autorisation réussie, le plan de direction secondaire du système de direction à commande électrique est disponible même après le fonctionnement d'urgence.

2. Système de direction à commande électrique selon la revendication 1, **caractérisé en ce que** le système d'authentification (9) comprend un terminal servant à l'authentification.

3. Système de direction à commande électrique selon la revendication 2, **caractérisé en ce que** le terminal est externe et peut être connecté à l'interface de communication.

4. Système de direction à commande électrique selon l'une des revendications précédentes, **caractérisé en ce que** le système d'authentification (9) est configuré de telle sorte qu'un procédé d'authentification se déroule, dans lequel une clé ou un code est contrôlé(e).

5. Système de direction à commande électrique selon l'une des revendications précédentes 1 à 3, **caractérisé en ce que** le système d'authentification (9) est configuré de telle sorte qu'un procédé d'authentification se déroule, dans lequel une clé ou un code entré(e) par le biais du terminal est contrôlé(e).

6. Système de direction à commande électrique pour véhicules automobiles comprenant
• un plan de direction primaire doté d'un dispositif de transmission de direction (4) qui est conçu de telle sorte qu'il soumet des roues (6) devant être dirigées du véhicule automobile à un effet de consigne souhaité, et
• un plan de direction secondaire doté d'un dispositif de sécurité (7) qui fournit des fonctions prédéfinies, de sorte qu'en cas de malfonctionnement du plan de direction primaire, la direction des roues (6) demeure possible pendant un fonctionnement d'urgence, **caractérisé en ce que** le système de direction à commande électrique comprend un système d'authentification (9) doté d'une interface de communication servant à la communication avec le dispositif de sécurité (7), le système d'authentification (9) étant conçu de telle sorte que, dans le cas d'une autorisation réussie, le plan de direction secondaire du système de direction à commande électrique est disponible même après le fonctionnement d'urgence, le système d'authentification (9) étant configuré de telle sorte que le procédé d'authentification est combiné avec une interrogation d'emplacement.

7. Système de direction à commande électrique selon la revendication 6, **caractérisé en ce que** le système d'authentification (9) est configuré de telle sorte que des emplacements prédéfinis pour l'interrogation d'emplacement sont autorisés préalablement.

8. Système de direction à commande électrique selon la revendication 6, **caractérisé en ce que** le système d'authentification (9) est configuré de telle sorte que des zones géographiques prédéfinies pour l'interrogation d'emplacement sont autorisées préalablement.

9. Système de direction à commande électrique selon l'une des revendications 6 à 8, **caractérisé en ce que** le système d'authentification (9) est configuré de telle sorte que l'interrogation d'emplacement est basée sur GPS.

10. Système de direction à commande électrique selon l'une des revendications précédentes 6 à 9, **caractérisé en ce que** le plan de direction secondaire est réalisé de manière électrique ou électronique.

11. Système de direction à commande électrique selon l'une des revendications précédentes 6 à 10, **caractérisé en ce que** l'interface de communication est réalisée de manière unidirectionnelle.

12. Système de direction à commande électrique selon l'une des revendications 6 à 11, **caractérisé en ce que** le système d'authentification (9) comprend un terminal servant à l'authentification.

13. Système de direction à commande électrique selon la revendication 12, **caractérisé en ce que** le terminal est externe et peut être connecté à l'interface de communication.

14. Système de direction à commande électrique selon l'une des revendications précédentes 6 à 13, **caractérisé en ce que** le système d'authentification (9) est configuré de telle sorte qu'un procédé d'authentification se déroule, dans lequel une clé ou un code est contrôlé(e).

15. Système de direction à commande électrique selon l'une des revendications précédentes 6 à 13, **caractérisé en ce que** le système d'authentification (9) est configuré de telle sorte qu'un procédé d'authentification se déroule, dans lequel une clé ou un code entré(e) par le biais du terminal est contrôlé(e).

16. Terminal servant à l'authentification pour un système de direction à commande électrique selon l'une des revendications précédentes 1 à 15.
